# EUROPEAN PATENT SPECIFICATION

(11) **EP 2 313 811 B1**
(45) Date of publication and mention of the grant of the patent: **23.03.2016**
(21) Application number: 09757611.0
(22) Date of filing: 05.06.2009
(51) Int. Cl.: G03G 15/00, G06F 3/12, H04N 1/00

(54) **PRINTER WITH SHOOT OUT FUNCTION**
DRUCKER MIT AUSWURFFUNKTION
IMPRIMANTE DOTÉE D'UNE FONCTION D' IMPRIMÉ DE TEST

(30) Priority: 06.06.2008 EP 08157738
(43) Date of publication of application: 27.04.2011
(73) Proprietor: OCE-Technologies B.V., 5900 CA Venlo (NL)
(72) Inventor: GERRITS, Antonius, Maria, NL-5941 AJ Velden (NL); EISENBERG, Rolf, NL-5913 VH Venlo (NL)
(74) Representative: Vanoppen, Ronny R.J.
(86) International application number: PCT/EP2009/056924
(87) International publication number: WO 2009/147230

(56) References cited:
- EP-A- 0 547 028
- US-A- 5 237 382
- US-A- 5 489 969
- US-A- 5 610 700

## Description

The invention relates to a printing system adapted to carry out a print job on the basis of print job data supplied to the printing system and to discharge resulting printed pages at a first job output, the printing system comprising shoot out means for printing out a selection of duplicates from the resulting printed pages and for discharging the duplicates as shoot outs at a second output, said shoot out means being programmable by a user in order to establish a mode of operation of the shoot out means by programming the selection of duplicates to be discharged at the second output.

The shoot out function permits the operator to check the quality of the printed copies from time to time, without disturbing the regular work flow. The shoot outs may be archived for documentation purposes. This is particularly useful in the mailing and transaction print industry. In the mailing and transaction print industry the resulting printed pages will consist of a number of sets, in this application also referred to as documents or letters. In general, a "set" is defined as a number of pages that belong togther in any way, e. g. pages belonging to one and the same letter or pages belonging to one and the same copy of a booklet. These printed sets are normally sent directly to the addressees, and there may be a need to respond to complaints of customers claiming that the quality of the copies was not satisfactory.

A printer with such a shoot out function has been described in US 7 075 667.

US-A-2004/0027602 discloses a printer wherein print jobs that are discharged at the job output may be separated from one another by banner pages.

It is an object of the invention to provide a printer with improved shoot out function.

According to the invention, the printing system is adapted to print a banner page for the duplicates and to discharge the banner page at the second output.

In the printing system according to the invention, shoot outs can reliably be made of any of the resulting printed pages, as defined in advance by the user, and the banner pages printed for the shoot outs will help to distinguish between shoot outs that result from different print jobs or from different documents, for example. In this way the user is able to adapt the shoot outs to be generated and to handle them in a very flexible way so that all needs and requirements that are posed onto the set of shoot outs can be accommodated.

More specific optional features of the invention are indicated in the dependent claims.

Typically, the printer will sequentially process a number of print jobs that are lined-up in a print queue. Then, for the purpose of job identification, the printer should be capable of printing or inserting banner pages between the copies belonging to different print jobs. The printing system according to the invention may be configured to make also a shoot out of each banner page. Thus, the shoot outs that belong to different jobs will be separated by shoot out banner pages when they are discharged at the second output. This helps to identify the jobs to which the individual shoot outs belong.

When the resulting printed pages of a job comprise a plurality of sets (e.g. documents), it is posssible that a mode of operation comprises printing out duplicate copies of pages of sets designated by the user. For a designated set, the user may select all pages or he may select one or just some of it as shoot outs.

Then, the printer may print a banner page for each set or document for which a shoot out is made. This banner page may indicate the document count and will be delivered at the separate output of the printer together with the shoot out copy of the document, so as to identify the document for which the shoot out has been made.

This provides a printer with improved quality monitoring capabilities for multi-page sets. These shoot outs will not consist just of a single page but will comprise a copy of the entire document (in case all pages were selected). As a result, when a customer who has submitted a print job with multi-page documents complains that the print quality of a specific page of the document is not satisfactory, this can easily be checked by reference to the shoot outs.

In this way the invention is particularly useful in variable data printing, e.g. in a case where a print job consist of printing a serial letter, wherein the documents to be printed are (multi-page) letters which all have the same contents but have addresses that vary from letter to letter. Since a shoot out is an extra copy of the document or letter, another copy of the letter for which a shoot out has been made will be discharged at the job output of the printer, so that it is assured that the letter will be sent to all the addressees specified by the customer, regardless of whether or not or how many shoot outs have been made.

In a particular embodiment, the shoot out means are programmable on a job-by-job basis and the mode of operation will be part of the print job data.

In this way the shoot out function is programmable on a job-by-job basis at a user workstation, and the pertinent program data may form part of the job specification that will be included in the print job data. And, optionally, still may be edited by the operator of the printer apparatus.

In an embodiment the printing apparatus comprises a control unit adapted to check for each page that is printed, if a duplicate of it is to be made.

This is a preferred way of realizing the shoot out function. According to a first variant of this embodiment pages, for which shoot outs have to be produced, are determined based on a page count. In case documents are involved, and these documents have all the same number x of pages, and a shoot out is to be made for every N-th document, the printer may be configured to make a shoot out for all pages whose page count number is between m and m+x-1, wherein m is an integral multiple of N.

According to a second variant of this embodiment, the shoot out function may be based directly on a document count. In this case, the documents of the print job may have different numbers of pages, if the control unit is capable of detecting the document boundaries automatically or if the number of pages of each individual document is included in the job specification or input manually by the operator.

In a further embodiment the printing system according to the invention comprises a print engine and a control unit adapted to instruct the print engine to print all the pages of the set one after another and to discharge the printed copies at the job output, and further adapted to instruct the print engine to print duplicates of all pages of a set one after another and to discharge the duplicates at the separate output, if the set is one for which duplicates are to be made.

In this way the duplicate shoot out copies of the whole document may be printed in one batch, which has the advantage that the documents may also include cyclic media, e. g. tabs, without the cyclic sequence being disrupted by the shoot outs.

It is preferable that a shoot out is always made for the very first document of a print job (m = 0).

Preferred embodiments of the invention will now be described in conjunction with the drawings, wherein:
- Fig. 1: is a block diagram of a printer according to the invention;
- Fig. 2: shows an example of a user interface screen that may be used for programming shoot outs; and
- Figs. 3 and 4: are flow diagrams illustrating different embodiments of the invention.

A printing system may just consist out of one printing apparatus or it may comprise also a print server, other printers, a network and printer drivers at workstations for submitting jobs.

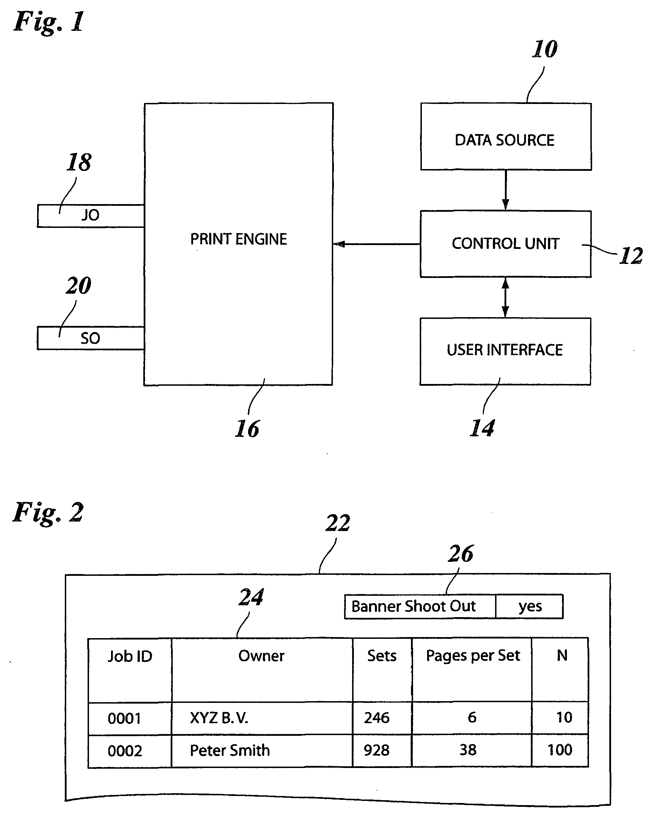

As is shown in Fig. 1, a printer comprises a data source 10 for print job data, a control unit 12, a local user interface 14 and a print engine 16, e.g. a laser printer, an electrographic print engine or the like. The data source 10 may comprise a memory for storing print job data, i.e. print data and associated job specifications, that may have been transmitted to the printer via a network or may have been generated locally by means of a scanner (not shown) and the user interface. The control unit 12 administers the processing of the print jobs stored in the memory of the data source 10 and sends the print data to the print engine 10 and instructs the same to print copies in accordance with the job specifications.

A print job will typically include a plurality of sets and each may have one or more pages. For example, if the print job consists of a serial letter to be sent to a number of different addressees, the documents of the job will be formed by the individual letters and will differ from one another only in their addresses. On the other hand, when the print job consists of printing several copies of a multi-page brochure or booklet, the documents may be identical copies of the brochure or booklet.

The print engine 16 has at least one job output 18 for discharging the copies that have been printed in accordance with the print jobs, and it has a separate output 20 for discharging so-called shoot outs. A shoot out is a duplicate copy of a printed page or of a complete multi-page document that has been printed in the course of a print job. These shoot outs are produced from time to time for the purpose of monitoring and documenting the quality of the printed copies.

The user interface 14 permits an operator of the printer to intervene into the job processing, if necessary, and to set or change the configuration of the printer. The user interface 14 may also be used for programming a suitable strategy for an automatic production of shoot outs.

Fig. 2 shows an example of a display screen 22 of the user interface 14. It is noted that this screen could also be generated by a printer driver at a workstation for display at the workstation. In this example, the display screen 22 shows a table 24 listing a number of print jobs that are to be processed. Each print job is identified by a job ID. The table 24 further indicates a number of job specifications or parameters for each print job. In the example shown, these specifications and parameters comprise the owner of the print job, i.e. the customer who has ordered the job, and the number of copy sets or documents to be printed. If each document or copy set of a job comprises the same number of pages, as is the case for example with serial letters and booklets, the table 24 also indicates the number of pages per set. Another parameter N specifies the shoot out interval. If N is set to 10, for example, this means that a shoot out will be made for all pages of every tenth document that is printed. Thus, since the job 0001 comprises 246 documents, shoot outs will be made for 24 of these documents, and each shoot out will comprise 6 pages. These shoot outs are discharged by the print engine 10 at the output 20 and may be taken out and archived as samples, so that the quality of the printed copies may be checked if there should be any complaints from the customer. The operator may change the parameter N individually for each print job, in view, for example, the quality requirements of the customer and the volume of the job.

When copies of a plurality of print jobs are discharged via the same job output 18 of the print engine, it is common practice to separate the copies belonging to the different jobs by banner pages that are automatically printed and/or inserted by the print engine 10. The printer according to the invention provides the additional option to produce banners for the shoot outs, so that the shoot outs for different jobs discharged via the shoot out output 20 are also separated by banners. These banner shoot outs may be produced even when no banners are provided for the jobs themselves. As is shown in Fig. 2, the screen 22 shows a dialogue 26 permitting the operator to specify whether or not banner shoot outs are to be produced.

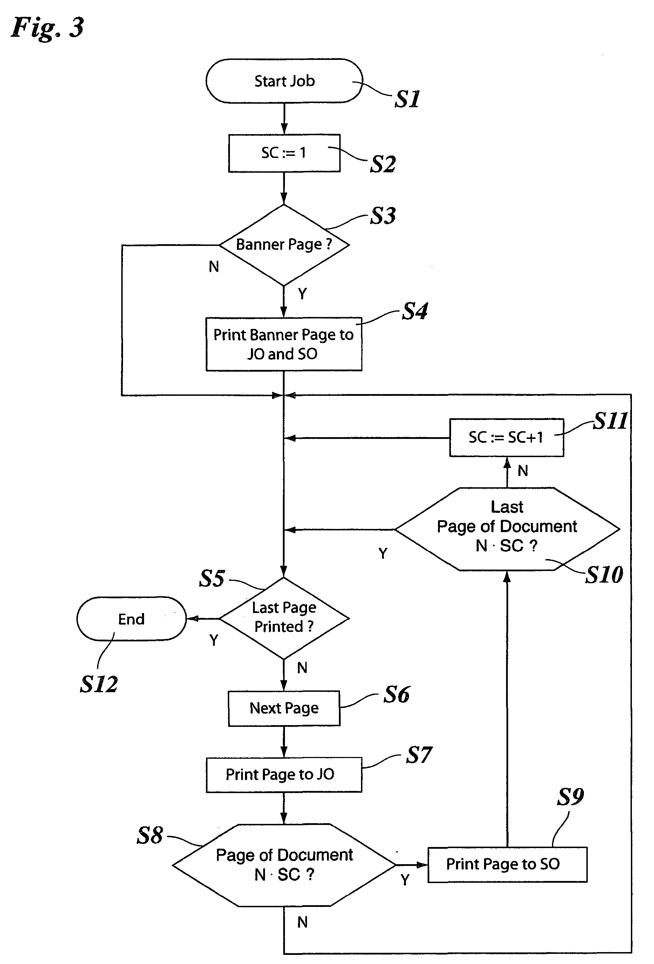

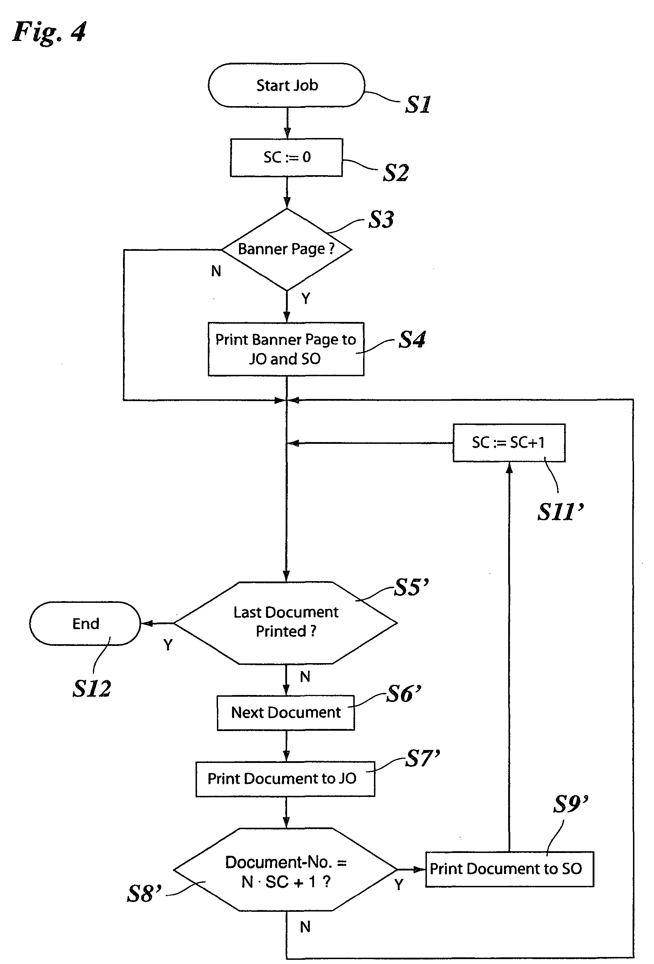

The control unit 12 includes a program routine that controls the production of shoot outs. Two examples of this routine will now be described in conjunction with Figs. 3 and 4.

In Fig. 3, a print job is started at step S1. In step S2, a shoot out counter SC is initialised with the value "1".

Step S3 checks whether the first page of the print job shall be a banner page. If this is the case, the print engine is instructed in step S4 to print a banner page to be sent to the job output (JO) 18 and to print another banner page to be discharged at the shoot out output (SO) 20. If there is no banner page to be printed, then the step S4 is skipped. Then, it is checked in step S5 whether the last page of the entire job has been reached and printed already. Since this will not be the case at the start of the job, the routine proceeds with step S6, where the print data for the next page (the first page) are sent to the print engine, and the page is printed in step S7.

Then it is checked in step S8 whether the page that has been printed in step S7 belongs to a document,whose number is N times SC. Here, N is the shoot out interval parameter that has been explained in conjunction with Fig. 2. Thus, if N = 10 and SC still has the initial value 1, it will be checked whether the page belongs to the tenth document of the job. As long as this is not the case, the routine loops back to step S5, and the steps S5-S8 are repeated cyclically until the tenth document is reached. Then, the routine will branch from step S8 to step S9, and a second copy of the same page is printed and is sent to the shoot out output 20. Then, step S10 checks whether the shoot out that has been printed in step S9 was the last page of the tenth document. As long as this is not the case, the routine branches again to step S5, and the loop is repeated for all the pages of the tenth document. When the last page of this document has been reached, the routine branches from step S10 to step S11, where SC is incremented by one. Then, the routine returns to step S5 and repeats the loop S5-S8 until the twentieth documents is reached. Then, shoot outs will be produced for all the pages of the twentieth documents, and SC will again be incremented in step S11. In this way, by running through the nested loops described above, shoot outs will be produced for all the pages of every N-th document of the job, until it is finally detected in step S5 that the last page of the job has been printed and the routine stops with step S12.

In a variant of this embodiment, suitable when all documents of a print job have the same number x of pages, the shoot out function may be based on a count of the number of pages that have been printed, i.e. the printer may be configured to make a shoot out for all pages whose page count number is between m and m+x-1, wherein m is an integral multiple of N. So in S8 the page count will be checked against this criterion.

In the process that has been described above, the shoot outs are produced on a perpage basis, that is, it is decided for each individual page of the job (in step S8) whether or not a shoot out for that page has to be printed.

In a modified embodiment, shown in Fig. 4, the production of shoot outs is controlled on a per-document basis.

In Fig. 4, the steps S1-S4 and S12 are equivalent to the steps that have been described in conjunction with Fig. 3. However, in step S5', it is not checked whether the last page of the job has been printed but whether the last document (which may consist of several pages) has been printed. If this is not the case, the entire next document is sent to the print engine, and all the pages of this document are printed in step S7' in one batch. The copies are again sent to the job output 18.

Step S8' checks whether the document that has been printed in step S7' is one of the documents for which a shoot out has to be made. If this is the case, shoot outs for all the pages of this document and also a banner page for this particular document are printed in one batch in step S9' and are sent to the shoot out output 20. Then, since the detection whether the last page of this document has been reached is implicitly included in step S9', the routine proceeds directly to step S11' where the counter SC is incremented by one, and then returns to step S5'.

Another modification that has been illustrated in Fig. 4 relates to the fact that, here, the counter SC is initialised with the value "0" in step S2. In step S8', it is checked whether the document number is equal to N*SC+1. In this way, if N=10, for example, a shoot out is produced for the documents 1, 11, 21, ... of the job. This modification, which is of course also possible in the embodiment shown in Fig. 3, has the advantage that a shoot out is produced already for the very first document of the job. Thus, when a customer complains that there were a defect in the fourth document, for example, it can be checked by reference to the first shoot out whether the defect was present already from the outset.

In a particular embodiment the printer is an ink jet printer.

## Claims

1. A printing system adapted to carry out a print job on the basis of print job data supplied to the printing system and to discharge resulting printed pages at a first job output (18), the printing system comprising shoot out means for printing out a selection of duplicates from the resulting printed pages and for discharging the duplicates as shoot outs at a second output (20), said shoot out means being programmable by a user in order to establish a mode of operation of the shoot out means by programming the selection of duplicates to be discharged at the second output (20), **characterized in that** the printing system is adapted to print (S4) a banner page for the duplicates and to discharge the banner page at the second output (20).

2. The printing system according to claim 1, adapted to print (S4) a banner page for each print job and discharge the banner page at the first job output (18).

3. The printing system according to claim 1 or 2, comprising a printing apparatus provided with a user interface (14) adapted to be programmed by the user in order to establish the mode of operation of the shoot out means.

4. The printing system according to claim 1 or 2, wherein the shoot out means are programmable on a job-by-job basis and program instructions for the mode of operation of the shoot out means form part of the print job data.

5. The printing system according to any of the preceding claims, wherein the resulting printed pages comprise a plurality of sets of pages, a set being defined as a number of pages that belong together, and wherein a mode of operation of the shoot out means comprises printing out duplicates of pages of sets designated by the user.

6. The printing system according to claim 5, adapted to print a banner page for each set for which a duplicate is to be made, and to discharge the banner page to the second output (20).

7. The printing system according to claim 5 or 6, wherein the mode of operation of the shoot out means comprises printing out duplicates of pages of each N-th set, N being an integral number.

8. The printing system according to claim 6 or 7, comprising a print engine (16) and a control unit (12) adapted to instruct the print engine (16) to print all the pages of the set one after another and to discharge the printed copies at the job output (18), and further adapted to instruct the print engine (16) to print duplicates of all pages of a set one after another and to discharge the duplicates at the second output (20), if the set is one for which duplicates are to be made.

9. The printing system according to any of the claims 1-7, comprising a printing apparatus having a control unit (12) adapted to check (S8) for each page that is printed, if a duplicate of it is to be made.

10. The printing system according to any of the preceding claims, comprising an ink jet printing apparatus.

## Patentansprüche

1. Druckersystem, das dazu eingerichtet ist, einen Druckauftrag auf der Grundlage von Druckauftragsdaten auszuführen, die dem Druckersystem zugeführt werden, und die entstehenden gedruckten Seiten an einem ersten Auftragsausgabeport (18) auszugeben, wobei das Druckersystem eine Auswurfeinrichtung aufweist, zum Ausdrucken einer Auswahl von Duplikaten der erhaltenen gedruckten Seiten und zur Ausgabe der Duplikate als ein Auswurf an einem zweiten Ausgabeport (20), wobei die Auswurfeinrichtung durch einen Benutzer programmierbar ist, um durch Programmieren der Auswahl der an dem zweiten Ausgabeport auszugebenden Duplikate einen Betriebsmodus der Auswurfeinrichtung zu etablieren, **dadurch gekennzeichnet, dass** das Druckersystem dazu eingerichtet ist, eine Bannerseite für die Duplikate zu drucken (S4) und die Bannerseite an dem zweiten Ausgabeport (20) auszugeben.

2. Druckersystem nach Anspruch 1, das dazu eingerichtet ist, eine Bannerseite für jeden Druckauftrag zu drucken (S4) und die Bannerseite an dem ersten Auftragsausgabeport (18) auszugeben.

3. Druckersystem nach Anspruch 1 oder 2, mit einem Drucker, der eine Benutzerschnittstelle (14) hat, die dazu eingerichtet ist, von dem Benutzer programmiert zu werden, um den Betriebsmodus der Auswurfeinrichtung zu etablieren.

4. Druckersystem nach Anspruch 1 oder 2, bei dem die Auswurfeinrichtung Auftrag für Auftrag programmierbar ist und Programmbefehle für den Betriebsmodus der Auswurfeinrichtung einen Teil der Druckauftragsdaten bilden.

5. Druckersystem nach einem der vorstehenden Ansprüche, bei dem die erhaltenen gedruckten Seiten eine Vielzahl von Sätzen von Seiten umfassen, wobei ein Satz definiert ist als eine Anzahl von Seiten, die zusammengehören, und wobei ein Betriebsmodus der Auswurfeinrichtung das Ausdrucken von Duplikaten von Seiten von Sätzen einschließt, die durch den Benutzer bestimmt wurden.

6. Druckersystem nach Anspruch 5, das dazu eingerichtet ist, eine Bannerseite für jeden Satz zu drucken, für den ein Duplikat angefertigt wird, und die Bannerseite an den zweiten Ausgabeport auszugeben.

7. Druckersystem nach Anspruch 5 oder 6, bei dem der Betriebsmodus der Auswurfeinrichtung das Ausdrucken von Duplikaten von Seiten jedes N-ten Satzes einschließt, wobei N eine ganze Zahl ist.

8. Druckersystem nach Anspruch 6 oder 7, mit einer Druckereinheit (16) und einer Steuereinheit (12), die dazu eingerichtet ist, die Druckereinheit (16) anzuweisen, alle Seiten des Satzes eine nach der anderen zu drucken und die gedruckten Kopien an dem Auftragsausgabeport (18) auszugeben, und die weiterhin dazu eingerichtet ist, die Druckereinheit (16) anzuweisen, Duplikate aller Seiten eines Satzes eine nach der anderen zu drucken und die Duplikate an dem zweiten Ausgabeport (20) auszugeben, wenn der Satz einer derjenigen Sätze ist, für den Duplikate angefertigt werden sollen.

9. Druckersystem nach einem der Ansprüche 1 bis 7, mit einem Druckgerät, das eine Steuereinheit (12) aufweist, die dazu eingerichtet ist, für jede Seite, die gedruckt wird, zu prüfen (S8), ob ein Duplikat anzufertigen ist.

10. Druckersystem nach einem der vorstehenden Ansprüche, mit einem Tintenstrahldruckgerät.

## Revendications

1. Système d'impression conçu pour effectuer un travail d'impression sur la base de données de travail d'impression fournies au système d'impression et pour décharger des pages imprimées résultantes au niveau d'une première sortie de travail (18), le système d'impression comprenant un moyen de tirage pour imprimer une sélection de duplicata à partir des pages imprimées résultantes et pour décharger les duplicata en tant que tirages au niveau d'une seconde sortie (20), ledit moyen de tirage étant programmable par un utilisateur pour établir un mode de fonctionnement du moyen de tirage en programmant la sélection de duplicata à décharger au niveau de la seconde sortie (20), **caractérisé en ce que** le système d'impression est conçu pour imprimer (S4) une page d'accueil pour les duplicata et pour décharger la page d'accueil au niveau de la seconde sortie (20).

2. Système d'impression selon la revendication 1, conçu pour imprimer (S4) une page d'accueil pour chaque travail d'impression et pour décharger la page d'accueil au niveau de la première sortie de travail (18).

3. Système d'impression selon la revendication 1 ou 2, comprenant un appareil d'impression muni d'une interface utilisateur (14) conçue pour être programmée par l'utilisateur afin d'établir le mode de fonctionnement du moyen de tirage.

4. Système d'impression selon la revendication 1 ou 2, dans lequel le moyen de tirage est programmable sur une base travail par travail et des instructions de programme pour le mode de fonctionnement du moyen de tirage forment une partie des données de travail d'impression.

5. Système d'impression selon n'importe laquelle des revendications précédentes, dans lequel les pages imprimées résultantes comprennent une pluralité d'ensembles de pages, un ensemble étant défini comme un certain nombre de pages qui doivent rester ensemble, et dans lequel un mode de fonctionnement du moyen de tirage comprend l'impression de duplicata de pages d'ensembles désignés par l'utilisateur.

6. Système d'impression selon la revendication 5, conçu pour imprimer une page d'accueil pour chaque ensemble pour lequel un duplicata doit être fait, et pour décharger la page d'accueil vers la seconde sortie (20).

7. Système d'impression selon la revendication 5 ou 6, dans lequel le mode de fonctionnement du moyen de tirage comprend l'impression de duplicata de pages de chaque ensemble de rang N, N étant un nombre entier.

8. Système d'impression selon la revendication 6 ou 7, comprenant un moteur d'impression (16) et une unité de commande (12) conçue pour ordonner au moteur d'impression (16) d'imprimer toutes les pages de l'ensemble l'une après l'autre et de décharger les copies imprimées au niveau de la sortie de travail (18), et conçue en outre pour ordonner au moteur d'impression (16) d'imprimer des duplicata de toutes les pages d'un ensemble l'une après l'autre et de décharger les duplicata au niveau de la seconde sortie (20), si l'ensemble est un ensemble pour lequel des duplicata doivent être faits.

9. Système d'impression selon n'importe laquelle des revendications 1 à 7, comprenant un appareil d'impression ayant une unité de commande (12) conçue pour vérifier (S8) pour chaque page qui est imprimée, si un duplicata de celle-ci doit être fait.

10. Système d'impression selon n'importe laquelle des revendications précédentes, comprenant un appareil d'impression à jet d'encre.
